# EUROPEAN PATENT SPECIFICATION

(11) **EP 0 410 961 B1**
(45) Date of publication and mention of the grant of the patent: **18.08.1993**
(21) Application number: 87901168.2
(22) Date of filing: 13.02.1987
(51) Int. Cl.: C02F 11/12, B01D 29/11

(54) **A METHOD AND AN APPARATUS FOR SEPARATING SOLID PARTICLES FROM A LIQUID**
VERFAHREN UND VORRICHTUNG ZUR ABTRENNUNG FESTER TEILCHEN AUS EINER FLÜSSIGKEIT
PROCEDE ET APPAREIL DE SEPARATION DE PARTICULES SOLIDES CONTENUES DANS UN LIQUIDE

(30) Priority: 14.02.1986 SE 8600659; 15.08.1986 SE 8603434
(43) Date of publication of application: 06.02.1991
(73) Proprietor: STEDFELDT, Hans, S-147 00 Tumba (SE)
(72) Inventor: STEDFELDT, Hans, S-147 00 Tumba (SE)
(74) Representative: Söderström, Bengt Ake
(86) International application number: SE8700069
(87) International publication number: WO8705005

(56) References cited:
- DE-A-33 404 52
- DE-B-11 632 92
- DE-C-52 879 4
- DE-C-85 853 9
- FR-A- 1 153 899

## Description

### TECHNICAL FIELD

The present invention relates to a method and an apparatus for separating solid particles from liquids, such as the dewatering and thickening of sludge produced at municipal and private sewage treatment plants, and sludge deriving from industrial operations.

### BACKGROUND ART

Sludge is always produced in conjunction with the separation of solid particles from a liquid. In today's society, the volumes of sludge produced are on the increase at the same rate as municipal and industrial sewage and waste-water treatment plants are developed and extended. In most cases, the sludge is of a consistency which is visually reminicent of sewage water. When the sludge must, by some means or other, be transported from the sewage treatment plant, it is vital - for both economical and environmental reasons - that its volumes be reduced as far as is possible. To this end, a number of various methods of approach are employed in sewage treatment plants, for instance by decanting the sludge liquor in sludge pools and sedimentation of the sludge in so-called gravitation thickeners, and separation of the clear-water phase. Despite these measures, the water content in the sludge is often very high, ranging from 95-98%.

For more efficient dewatering, some form of mechanical dewatering equipment is, as a rule, required, such as centrifuges, screen belt presses etc. Using such equipment, it is possible to reduce an aqueous content of the sludge to approximately 75-85%, or in other words, the total solids (TS) in the sludge is approximately 15-25%.

In the main, such mechanical dewatering equipment is only employed at large-scale sewage treatment plants, because of their prohibitively high cost. The term large-scale sewage treatment plants is here taken to mean such as serve approximately 2 000 person equivalents (pe) or more. In smaller sewage treatment plants, the sludge is often collected by a sludge tanker and is transported to a larger sewage treatment plant which is provided with sludge dewatering equipment. The sludge may also be conveyed to a landfill deposit or be spread on fields.

However, the restrictions relating to the management and disposal of such sludge have been tightened to such an extent as to create serious difficulties in finding suitable deposition sites and persons who are prepared to take care of the sludge.

With this in mind, the method and apparatus according to the present invention, which are both simple and economical in comparison with prior art dewatering equipment, also make for the equipping of smale-scale sewage treatment plants to enable such plants to manage their own dewatering operations.

Previously known are filters for the purification of liquids such as the apparatus described in DE-B-1163292. The filter is designed as a closed container, the container being divided in two parts by means of a filtration fabric. In operation of the filter a pressure difference is applied across the filtration fabric. The filter is also provided with a rotatable flushing system for cleaning the filter surfaces.

The apparatus according to DE-B-1163292 has a major disadvantage in that an additional container must be installed, where a separation is required, instead of just immersing the filtering apparatus in an existing sludge pool or sludge receptacle. It also requires the application of a pressure difference across the filtration fabric. Another disadvantage is that it could not be used to dewater sludge to a certain, predetermined degree, but rather just to separate solids from a continouous supply of liquid, until the formation of a filter cake, which has to be removed.

The latter is also true with the method and apparatus for the clarification of liquid described in DE-A-3340452. Here the separation is carried out in a container with a number of tubular filtration baskets, which are covered with a felt-like filter cloth. The liquid level in the container is kept within a narrow range. To achieve the desired separation, clarified liquid is pumped from the interior of the baskets, which are periodically cleaned by means of the introduction of pressurized air or a cleaning fluid under pressure.

As the baskets are narrow, obtaining a large filtering surface means installing a large number of baskets with the corresponding tubing, both for the pumping of reject from the baskets and for the introduction of pressurized air or cleaning fluid into the same, and also means for controlling the valves in the pipes leading to the respective pump. Also, the described method of removing filter cake from the filtration baskets is rather inefficient, and will be insufficient in most dewatering operations. In particular, it is not suitable when sludges are dewatered or thickened.

### OBJECT OF THE PRESENT INVENTION

Hence, the primary object of the present invention is to device a method and an apparatus by means of which the sludge volumes which are to be transported away from small-scale sewage treatment plants may be reduced. In that the water content of the sludge is reduced (the dry solids content increases) the sludge will be of a more solid consistency, which thereby offers the possibility of transporting the sludge by means of other vehicles than sludge tankers, for example in containers. The sludge may also be mixed with other types of refuse or waste for the production of compost.

A further object of the present invention is to device a method and a dewatering apparatus which functions according to a simple drainage principle and requires a minimum of peripheral machinery, while permitting installation in existing sludge pools and sludge receptacles at sewage treatment plants.

These and other objects according to the present invention as are more readily apparent from the following description will be attained by means of a method and apparatus as defined in the appended Claims.

### BRIEF SUMMARY OF THE INVENTION

In the method according to the present invention, one or more drainage units are placed in a sludge receptacle or pool. The drainage unit essentially comprises a dewatering container which is fitted with a screen, protrudes down into the sludge mass and is surrounded thereby. In this context, liquid is drained from the sludge into this container, while solid particles are retained on the outer face of the screen. The liquid is removed from the container and a level difference is realized between the liquid located in the container and the surrounding sludge mass. This level difference is the sole driving force which is utilized for realizing the dewatering operation. The dewatered, or thickened, sludge is subsequently removed from the sludge container or pool and the screened container is cleaned, when necessary, by flushing by means of a flushing system disposed in the drainage unit.

Replenishment of sludge into the sludge container, drainage of liquid from the sludge and removal of the screenings (or reject) from the interior of the container may all be effected simultaneously during a given period of time, until the contents of concentrated, or thickened, sludge in the sludge container begins to reach such a degree that dewatering is decelerated and the sludge container is filled to its maximum level.

The present invention also relates to a drainage unit which is suitable for putting the method according to the present invention into practice. The drainage unit substantially comprises a dewatering container which has at least one screened wall and/or bottom and is intended to be immersed in a sludge mass for drainage of liquid from the sludge mass into the container, while solid particles are retained to the desired extent on its outside. It also includes a reject system for removal of liquid collected in the container and for realizing a level difference between the level of the liquid in the container and the surrounding sludge mass. The interior of the container may be in communication with the space above the surrounding sludge. Hence, the level difference is the sole driving force employed for the dewatering operation. The drainage unit further includes a flushing system for flushing the screened surfaces.

In many physical applications, it may be desirable to attain as large a screening surface as possible, while limiting the vertical extent of the drainage unit as a whole. This applies, for example, in installations in relatively shallow sludge thickening pools. Furthermore, it may often be of crucial importance that the drainage unit be designed so as to encroach as little as possible on the available volume in the sludge container. According to one preferred embodiment of the present invention, the dewatering container is, thus, designed as a double-walled shell construction which is open at both top and bottom, and is provided with at least one wholly or partly liquid-permeable wall. When the drainage unit is placed in a sludge mass, liquid drains off to the dewatering container formed by the space between the double walls of the shell constuction.

The container may be of any optional geometric configuration. According to one preferred embodiment of the present invention, the container is, however, designed as a cylinder which is open at one end and is provided with a screened jacket, and is placed upright in the sludge mass with the open end above the sludge level. This cylindrical form allows for uniform dewatering of a large sludge mass about the cylinder without giving rise to concentration gradients. The cylindrical form also makes it constructionally easier to cause the container to withstand the pressure to which it is subjected because of the level difference in and outside the container.

The dewatering container designed as a double-walled shell construction may also be of any optional geometric configuration. However, according to one preffered embodiment of the present invention, the shell construction is designed as a double-walled, open-ended cylinder with a screened inner and outer jacket and is placed upright in the sludge mass. The inner and outer jackets are interconnected at at least the downwardly facing end of the cylinder, such that the cavity between the inner and the outer jackets forms an annular dewatering container. This annular configuration allows uniform dewatering of a large sludge mass about and within the annulus. The dewatering container also takes up slight volume, in that the interior of the cylider may be utilized for replenishment of sludge. The thus available screening surface area per unit of height will be considerable, which ensures efficient and effective dewatering even when the sludge level has fallen to the lower regions of the drainage unit.

A further advantage inherent in the cylindrical form is that a rotating flushing system will be capable of cleaning the screened surfaces in a particularly efficient manner.

Since the dewatering container is provided with an open end above the sludge level, no further measures will be required to equilibriate the air pressure between the interior of the container and the space above the the sludge mass. However, it is also possible without departing from the spirit and scope of the present invention to render the container completely enclosed, such that it may be immersed beneath the sludge level in its entirety. In this case, a ventilation means is provided, if necessary, from the interior of the container to the space above the sludge level. Such an embodiment may be advantageous when the sludge container in which the drainage unit is mounted is tall and narrow.

The container may also be designed in the form of, for example, an upwardly open cylinder in which only the lower region of the jacket is screened. The upper region of the cylinder will then function as a ventilation to the space above the sludge level.

The dewatering process may also be controlled by regulating the pressure in the interior of the dewatering container, for example by the creation of a partial vacuum.

The upper, open end of the container may also be provided with a removable lid which may readily be displaced for inspection and maintenance of, for example, the flushing system. The lid prevents aerosols from disseminating from the container in conjunction with flushing of the screened surfaces.

The draining unit may be manufactured in section in order, for instance, to facilitate installation in existing sludge catchments or in sludge containers with a narrow opening.

The reject system may be designed for pumping of the reject (or screeenings) from the dewatering container or for leading off the reject by force of gravity. The dry solids content of the input sludge is often a known quantity and it may be desirable to raise this dry solids content to a predetermined level, for example the sludge volume is to be dewatered until such time as its volume is reduced to a certain proportion of the original. Consequently, the reject system may be preset to discontinue the dewatering process when the desired volume reduction has been attained.

For sludge dewatering, one or more drainage units may be disposed in a sludge receptacle, with one inlet for sludge in its pristine condition and a bottom outlet for dewatered sludge.

When sludge is to be thickened, one or more drainage units may be disposed in a sludge pool. The drainage units are preferably placed in symmetrical relationship within the sludge pool. Drainage units may, for instance, be installed in existing sludge thickeners at sewage treatment plants. The sludge in the thickener may then be further thickened, which may, for example, be of considerable importance if the sludge is pumped to digestion tanks for digestion and gas formation.

### BRIEF DESCRIPTION OF THE ACCOMPANYING DRAWINGS

The nature of the present invention and its aspects will be more readily understood from the following brief description of the accompanying Drawings, and discussion relating thereto.

In the accompanying Drawings:
Fig. 1 is a sectioned side elevation of a sludge container which accomodates one embodiment of a drainage unit according to the present invention;
Fig. 2 is a detailed view of one embodiment of a liquid-permeable, screened double wall for a drainage unit according to the present invention; and
Fig. 3 is a schematic top plan view of a sludge thickener in which a number of drainage units according to the present invention have been disposed.

### DESCRIPTION OF PREFERRED EMBODIMENT

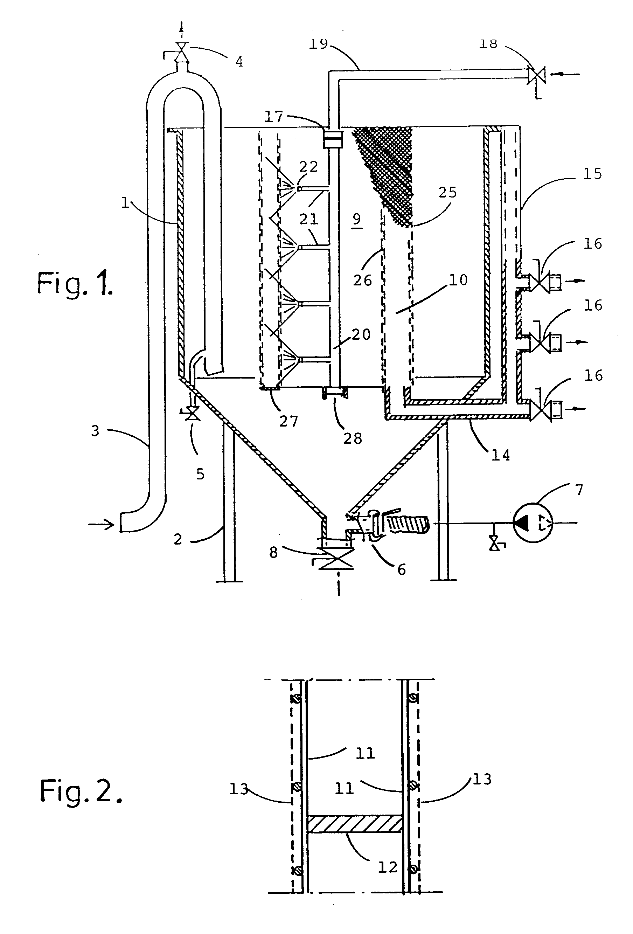

Referring to the Drawings, in Fig. 1 reference No. 1 relates to a sludge container which in the illustrated embodiment is an open, cylindrical container with a conical bottom region. A sludge container of this type is particularly advantageous for use in the disposition of a drainage unit according to the present invention. The sludge container rests on supporting legs 2 which may be of such height that a container or the like may be placed beneath the sludge container for receiving dewatered sludge. The sludge container may be of sheet metal or glass fibre-reinforced plastic. Affording a light-weight construction as it does, plastic may be of great advantage in many contexts, for example if the container is to be moved from one place to another. Reference No. 3 designates an inlet conduit for pristine sludge, the conduit being led across the upper edge of the sludge container and discharging at the inner wall where the conical bottom region commences. The conduit 3 may also be designed as a divided conduit at the upper edge of the sludge container, so as to counteract syphon effects. As a rule flocculation chemicals (such as polymer solutions) are added to the sludge to accomplish flocculation which will facilitate the dewatering process. These chemicals are added to the sludge before it is pumped into the sludge container. Consequently, it is of great importance that the flocced sludge be fed into the sludge container as gently as possible and with the least possible degree of turbulence. Most appropriately, replenishment of the sludge container should be effected from its bottom and/or along its inner wall. Reference No. 4 designates an air bleeder valve and reference No. 5 a branch pipe for sampling the sludge pumped into the container. Reference No. 6 designates an alternative inlet for pristine sludge at the tip of the base cone. Reference No. 7 designates a pump, for example, an eccentric screw pump for pumping sludge by means of a hose which is connected to the inlet 6. The inlet 6 and the pump 7 may also be employed for pumping out dewatered sludge from the sludge container. At the tip of the base cone, there is disposed a bottom outlet 8, provided with a valve, for tapping off dewatered sludge. The bottom outlet may also be connected to various types of discharge apparatus for sludge, for example a screw conveyor or a pump. If difficulties are experienced in removing the sludge from the sludge container, a so-called floating screw may be installed in the conical section of the container.

In the sludge container, there is disposed a drainage unit 9 which, in the illustrated embodiment, consists of an open, double-walled cylinder with a screened inner and outer jacket. The inner jacket 26 and the outer jacket 25 are interconnected with an annular base portion 27. The space between these jackets and this annular bottom forms an annular dewatering container 10. As is illustrated more closely in Fig. 2, the screened jacket consists of a relatively large meshed supporting lattice 11 which, in its turn, rests on reinforcements of profiled steel 12. A screen 13 is mounted on the outside of the lattice. According to one preferred embodiment of the invention, the screen may consist of fabric or of a mesh of plastic material such as polyester resin, polyamide, polypropylene or PTFE, but perforated stainless steel plates or metal sheeting may also be used. Depending upon the type of sludge involved, the sieve gauge of the screen may vary from one micron to 6 mm. However, for most applications, a gauge of between 0.5 and 2 mm would seem to be most appropriate.

The annular bottom 27 of the dewatering container 10 is sealed by a rigid material in order to impart body to the construction. However, the bottom may also be provided with a draining function, i.e. may be of the same construction as the walls of the container. The container 10 is mounted centrally and concentrically in the cylindrical sludge container. The upper, open end of the container is in communication with the space above the sludge, such that the same air pressure will prevail over the liquid in the container 10 as over the surrounding sludge in the container 1. Dewatering is accomplished solely on account of the level difference which is maintained between these containers. The container 10 extends down through the sludge container and may also project a distance down into the conical bottom region of the sludge container such that this region may also be utilized for dewatering. To permit undisturbed discharge of dewatered sludge, a certain space must, nevertheless, be left between the bottom of the container 10 and the bottom of the sludge container 1.

Since both the sludge container 1 and the container 10 are cylindrical and are disposed in concentric relationship with one another, the dewatering flow paths in the surrounding sludge will be of equal length throughout, and, as a result, concentration gradients may be avoided.

A reject outlet conduit 14 extends from the bottom region of the container 10 out through the sludge container. A level pipe 15 is connected to the reject outlet conduit, extends to a height which equals the maximum filling level of the sludge container, and is open at its upper end. Valve-fitted reject outlets 16 are disposed at different heights along the level pipe. By selection of the reject outlet 16, the dewatering process may be extended to a predetermined level and a desired, precalculated increase of the dry solids content of the sludge may be achieved.

The drainage unit is also fitted with a flushing system for cleaning the container 10 between dewatering cycles.

In the illustrated embodiment, the flushing apparatus consists of a rotary flushing arrangement disposed within the shell construction, the arrangement being, at its bottom end, rotatably journalled in a cross-beam 28 and being, at its upper end, connected by the intermediary of a swivel link 17 to a flushing liquid conduit 19 provided with a valve 18. The rotary flushing arrangement essentially comprises a central pipe 20 whence depart horizontal flushing tubes 21 provided with nozzles 22. The nozzles are inclined somewhat towards the inner jacket of the cylinder and are rotated by the water pressure, and flush both the inner and outer screened jackets from the inside of the cylinder. The rotary central pipe may also be designed as a crank which is supported solely at its upper anchorage point. The vertical prong of the crank, on which the nozzles are mounted, is disposed to project downwardly into the dewatering container, i.e. into the space between the inner and outer jackets, and to describe a planetary movement within this space. Both the inner and the outer jackets are thereby flushed from the inside of the dewatering container. Other flushing equipment available on the market may also be used, for example rotary flushing heads provided with nozzles.

The apparatus according to Fig. 1 operates as follows:
The pristine sludge is pumped, by means of a suitable pump, from, for example, a sludge catchment to the inlet 3 of the sludge container. If necessary, polymer solution may be added upstream or downstream of the pump for achieving the requisite flocculation in the sludge for the dewatering process. The sludge is fed into the container either at its bottom through the conduit 6, or via the tubular conduit 3.

From the valved branch pipe 5, samples are taken of the sludge which is pumped into the sludge container. The sample is taken immediately upstream of the discharge of the pipe in order to give the greatest possible representative picture of flocculation in the sludge which is fed into the container. After completed in-feed of sludge, the air bleeder valve 4 is opened so as to prevent any possible syphon effect and to prevent the sludge from running back to the sludge catchment via the sludge pump. In the event that the inlet conduit 3 is designed as a divided conduit, the air bleeder valve 4 may be dispensed with. When the sludge container has been filled with a suitable volume of sludge, the sludge pump is stopped. Normally, the pump functions are controlled by means of level electrodes or level flip-flops. In conjunction with replenishment of sludge, the dewatering container 10 of the drainage unit will be filled with sludge liquor. However, that portion of the sludge which has flocculated will not be able to pass through the walls of the screen and into the container. When the dewatering process is set in operation, one of the reject outlet valves 16 on the level pipe 15 is opened and the sludge liquor is tapped out from the container 10. At the same time as the sludge level in the sludge container falls, the sludge will be concentrated. Because of the available facility of regulating the height of the reject outlet, it is possible, if required, to predetermine the dry solids content which the sludge is to have after the dewatering process. The dewatered sludge is removed from the sludge container through the bottom outlet 8, for example by allowing it to fall into a container which is placed beneath the sludge container. If the dry solids content of the sludge is not excessive, the sludge may also be pumped off via the conduit 6 and the pump 7. The conduit 6 may also be used as an emergency outlet for reycling the sludge to the sludge catchment if the flocculation and the dewatering processes were to fail for some reason.

Sludge which has become deposited on the outside of the container 10 is then flushed off by means of the flushing system. The vertical central pipe 20 slowly rotates and causes the nozzles 22 to sweep across the whole jacket of the container. The speed of rotation is determined by the position of the flushing pipes fitted with nozzles and the reaction forces generated by the water pressure. The flushing operation is controlled by the valve 18 on the flushing water conduit 19. The valve may be designed for manual or automatic operation. If required, several of the functions of the dewaterer may be designed for automatic operation.

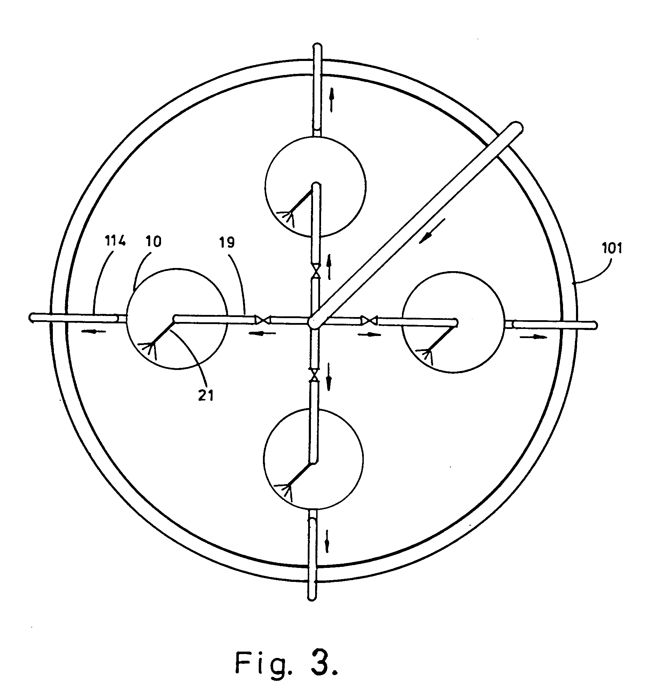

Fig. 3 illustrate a further embodiment in which the drainage units according to the present invention are employed. Reference No. 101 designates a circular sludge thickener in which four drainage units are symmetrically suspended in beams (not shown) at the upper edge of the thickener. The drainage unit may also be provided with floats and float in the pool, gradually sinking according as the level of sludge falls as water is drained off from the sludge.

The sludge thickener functions in the manner corresponding to that described in conjunction with Fig. 1. Discharge pumping of reject liquor may be controlled by means of level indicators until such time as a predetermined level has been attained in the sludge thickener, whereby it is possible to determine the total dry solids content of the sludge after the thickening operation.

The present invention should not be considered as restricted to those embodiments described above and shown on the drawings, many modifications being conceivable without departing from the spirit and scope of the appended claims.

## Claims

1. A method of separating liquid from solid particles, in particular dewatering and thickening of sludge **characterized in that** the separation is effected in that one or more drainage units (9) are placed in a sludge catchment or a sludge container, the drainage unit essentially comprising an open double-walled shell construction with wholly or partly screen-clad walls (25, 26) which are interconnected at at least the downwardly facing end of the shell construction which shell construction is immersed in and surrounded by the sludge mass; that liquid is drained from the sludge into the dewatering container (10) which is constituted by the space between the walls (25, 26) of the shell construction, while solid particles are retained on the outside of the screen thereof; that liquid is removed from the interior of said dewatering container at a level corresponding to the desired degree of dewatering until such time as the desired dry solids content is achieved in the surrounding sludge; that the sludge is removed from the sludge catchment/sludge container; and that the screened container (10) is, when necessary, cleaned by flushing, by means of a rotary flushing system disposed in the drainage unit.

2. A drainage unit for the separation of liquid from suspensions of solid material in liquid, in particular the dewatering and thickening of sludge, **characterized in that** it consists of a self-contained operative unit disposed to be placed in a sludge container or a sludge catchment for the removal of liquid from the sludge; and that it comprises an open double-walled shell construction with wholly or partly screen-clad walls (25, 26) which are interconnected at at least the downwardly facing end of the shell construction and a dewatering container (10) which is constituted by the space between the walls of the shell construction, and is intended to be immersed in the sludge mass for drainage of liquid from the sludge mass into the container (10) while solid particles are retained to a desired degree on the outside of the screen, a reject system (14-16; 23, 114) for removing liquid collected in the dewatering container, from the bottom of said container or at a level corresponding to the desired degree of dewatering, and a rotary flushing system (17-22) disposed in said drainage unit for flushing the screened surfaces.

3. The drainage unit as claimed in claim 2, **characterized in that** the shell construction consists of an open, double-walled cylinder with an inner and an outer jacket (25, 26), which are wholly or partly screen-clad; and that the cylinder is intended to be disposed upright in the sludge mass, the inner and outer jackets being interconnected at at least the downwardly facing end of the cylinder, such that the space between the inner and the outer jackets forms an annular dewatering container (10).

4. The drainage unit as claimed in any one of claims 2-3, **characterized in that** the reject system consists of a pump (23) disposed in the dewatering container, and a reject outlet conduit (114) connected to the pump.

5. The drainage unit as claimed in any one of claims 2-3, **characterized in that** the reject system further comprises a reject outlet conduit (14) and a level pipe (15) connected thereto with reject outlets (16) disposed at different heights.

6. The drainage unit as claimed in any one of claims 2-5, **characterized in that** the screened wall consists of a relatively coarse gauge supporting lattice or latticework (11, 12) on which the screen (13) has been disposed.

7. The drainage unit as claimed in claim 6, **characterized in that** the screen (13) has a sieve gauge of from 1 micron to 6 mm, preferably of the order of magnitude of between 0.5 and 2 mm.

8. The drainage unit as claimed in any one of claims 2-7, **characterized in that** the flushing system comprises a number of nozzles (22) which are operative to flush the screen-cladded surfaces of the dewatering container.

9. The drainage unit as claimed in claim 8, the flushing system further includes a flushing water conduit centrally rotating in said drainage unit whence depart a number of flushing tubes provided with said nozzles.

10. The drainage unit as claimed in claim 8, **characterized in that** said nozzles are mounted on one or more rotary flushing heads.

11. The drainage unit as claimed in any one of claims 2-10, **characterized in that** it is disposed in a sludge container (1) with an inlet (3) for pristine sludge, and a bottom outlet (6, 8) for dewatered sludge, the sludge container including, if necessary, further drainage units of the same construction.

12. The drainage unit as claimed in claim 11, **characterized in that** it is cylindrical and is concentrically disposed in said sludge container which is cylindrical and is provided with a conical bottom portion.

13. The drainage unit as claimed in any one of claims 2-10, **characterized in that** it is disposed in a sludge pool (101), which, if necessary, contains further drainage units of the same construction.

## Patentansprüche

1. Verfahren für das Trennen von Flüssigkeit von festen Teilchen, insbesondere Entwässern und Eindicken von Schlamm, **dadurch gekennzeichnet, daß** die Trennung dadurch bewirkt wird, daß eine oder mehrere Drainageeinheiten (9) in ein Schlammreservoir oder einen Schlammbehälter eingesetzt sind, wobei die Drainageeinheit im wesentlichen eine offene Doppelwandschalenkonstruktion mit vollständig oder teilweise gitter-, netz- oder schirmverkleideten Wänden (25, 26) aufweist, die mindestens an dem nach unten weisenden Stirnende der Schalenkonstruktion miteinander verbunden sind, welche Schalenkonstruktion in die Schlammasse eingetaucht und von dieser umgeben ist; daß die Flüssigkeit aus dem Schlamm in den Entwässerungsbehälter (10) entwässert wird, der durch den Raum zwischen den Wänden (25, 26) und der Schalenkonstruktion gebildet wird, während feste Teile an der Außenseite des Schirms der Schalenkonstruktion zurückgehalten werden; daß Flüssigkeit aus dem Inneren des Entwässerungsbehälters an einem Pegel entsprechend dem gewünschten Grad der Entwässerung bis zu einem solchen Zeitpunkt entfernt wird, wie der gewünschte Trockenfeststoffgehalt in dem umgebenden Schlamm erreicht ist; daß der Schlamm aus dem Schlammreservoir/dem Schlammbehälter entfernt wird; und daß der geschirmte Behälter (10), wenn es notwendig ist, durch Spülen mittels eines Rotationsspülsystems gereinigt wird, das in der Drainageeinheit angeordnet ist.

2. Drainageeinheit für die Trennung von Flüssigkeit und Suspensionen fester Materialien in Flüssigkeit, insbesondere für das Entwässern und Eindicken von Schlamm, **dadurch gekennzeichnet, daß** die Drainageeinheit aus einer selbständigen Arbeitseinheit besteht, die dafür ausgelegt ist, in einen Schlammbehälter oder ein Schlammreservoir für die Entfernung von Flüssigkeit aus dem Schlamm eingebracht zu werden; und daß die Einheit eine doppelwandige Schalenkonstruktion mit vollständig oder teilweise schrim-, netz- oder gitterverkleideten Wänden (25, 26), welche Wände mindestens an dem unteren Stirnende der Schalenkonstruktion miteinander verbunden sind, einen Entwässerungsbehälter (10), der durch den Raum zwischen den Wänden der Schalenkonstruktion gebildet ist und dafür bestimmt ist, in die Schlammasse für die Drainage von Flüssigkeit aus der Schlammasse in den Behälter (10) eingetaucht zu werden, während feste Teilchen in einem gewünschten Ausmaß auf der Außenseite des Schirms zurückgehalten werden, ein Zurückweisungssystem (14 bis 16; 23, 114) für die Entfernung von Flüssigkeit, die in dem Entwässerungsbehälter gesammelt ist, von dem Boden des Behälters oder an einem Pegel entsprechend dem gewünschten Grad der Entwässerung, und ein Rotationsspülsystem (17 bis 22) aufweist, das in der Drainageeinheit für das Spülen der geschirmten Oberflächen angeordnet ist.

3. Drainageeinheit nach Anspruch 2, **dadurch gekennzeichnet, daß** die Schalenkonstruktion aus einem offenen, doppelwandigen Zylinder mit einem inneren und äußeren Mantel (25, 26) besteht, die vollständig oder teilweise schirmverkleidet sind; und daß der Zylinder für das aufrechte Einbringen in die Schlammasse vorgesehen ist, die inneren und äußeren Mäntel an mindestens der unteren Stirnfläche des Zylinders miteinander verbunden sind, so daß der Raum zwischen den inneren und äußeren Mänteln einen ringförmigen Entwässerungsbehälter (10) bildet.

4. Drainageeinheit nach einem der Ansprüche 2 bis 3, **dadurch gekennzeichnet, daß** das Zurückweisungssystem aus einer Pumpe (23), die in dem Entwässerungsbehälter angeordnet ist, und einer Zurückweisungs-Auslaßleitung (114) besteht, die mit der Pumpe verbunden ist.

5. Drainageeinheit nach einer der Ansprüche 2 bis 3, **dadurch gekennzeichnet, daß** das Zurückweisungssystem ferner eine Zurückweisungs-Auslaßleitung (14) und ein Pegelrohr (15) aufweist, das mit dieser verbunden ist, wobei die Zurückweisungs-Auslässe (16) an unterschiedlichen Höhen angeordnet sind.

6. Drainageeinheit nach einem der Ansprüche 2 bis 5, **dadurch gekennzeichnet,** daß die abgeschirmte Wand aus einem relativ groben Umfangstützungsgitter- oder -lattenwerk (11, 12) besteht, auf welchem das Netz oder die Abschirmung (13) angebracht ist.

7. Drainageeinheit nach Anspruch 6, **dadurch gekennzeichnet, daß** die Abschirmung (13) eine Maschenweite von 1 µm bis 6 mm, vorzugsweise in der Größenordnung zwischen 0,5 und 2 mm aufweist.

8. Drainageeinheit nach einem der Ansprüche 2 bis 7, **dadurch gekennzeichnet, daß** das Spülsystem eine Anzahl von Düsen (22) aufweist, die betätigbar sind, um die abschirmungsverkleidete Oberfläche des Entwässerungsbehälters zu spülen.

9. Drainageeinheit nach Anspruch 8, wobei das Spülsystem ferner eine Spülwasserleitung aufweist, die sich mittig in der Drainageeinheit dreht, von woher eine Anzahl von Spülrohren, die mit den Düsen versehen sind, austritt.

10. Drainageeinheit nach Anspruch 8, **dadurch gekennzeichnet, daß** die Düsen auf einem oder mehreren sich drehenden Spülköpfen befestigt sind.

11. Drainageeinheit nach einem der Ansprüche 2 bis 10, **dadurch gekennzeichnet, daß** sie in einem Schlammbehälter (1) mit einem Einlaß (3) für ursprünglichen Schlamm und einem Bodenauslaß (6, 8) für entwässerten Schlamm versehen ist, wobei der Schlammbehälter, wenn es erforderlich ist, weitere Drainageeinheiten gleicher Konstruktion aufweist.

12. Drainageeinheit nach Anspruch 11, **dadurch gekennzeichnet, daß** sie zylindrisch ist und konzentrisch in dem Schlammbehälter angeordnet ist, der zylindrisch ist und mit einem konischen Bodenbereich versehen ist.

13. Drainageeinheit nach einem der Ansprüche 2 bis 10, **dadurch gekennzeichnet, daß** sie in einem Schlammbecken (101) angeordnet ist, das, wenn es erforderlich ist, weitere Drainageeinheiten gleichen Aufbaus enthält.

## Revendications

1. Procédé pour séparer un liquide, de particules solides et plus particulièrement d'essorage et d'épaississement d'une boue, procédé caractérisé en ce que la séparation est effectuée en plaçant un ou plusieurs blocs de drainage (9) dans un bassin de captage de boue ou un réservoir de boue, le bloc de drainage comprenant essentiellement une construction en coquille ouverte à double paroi munie de parois complètement ou partiellement recouvertes d'un revêtement de filtre (25, 26), ces parois étant reliées entre elles au moins à l'extrémité tournée vers le bas de la construction en coquille, cette construction en coquille étant plongée dans la masse de boue et entourée par celle-ci ; en ce que le liquide est drainé à partir de la boue pour passer dans un réservoir d'essorage (10) constitué par l'espace formé entre les parois (25, 26) de la construction en coquille, tandis que les particules solides son retenues sur l'extérieur du filtre de cette construction ; en ce que le liquide est retiré de l'intérieur du réservoir d'essorage à un niveau correspondant au degré d'essorage voulu, jusqu'au moment où la teneur voulue en solides secs est obtenue dans la boue environnante ; en ce que la boue est retirée du bassin de captage/réservoir de boue ; et en ce que le réservoir (10) muni du filtre est nettoyé au jet, lorsque cela est nécessaire, par un système de jets rotatifs montés dans le bloc de drainage.

2. Bloc de drainage pour séparer un liquide de suspensions de matières solides contenues dans ce liquide, et en particulier pour essorer et épaissir une boue, bloc de drainage caractérisé en ce qu'il est constitué par un bloc fonctionnel autonome conçu pour être placé dans un réservoir de boue ou un bassin de captage de boue de manière à extraire le liquide de la boue ; et en ce qu'il comprend une construction en coquille ouverte à double paroi munie de parois complètement ou partiellement recouvertes d'un revêtement de filtre (25, 26), ces parois étant reliées entre elles au moins à l'extrémité tournée vers le bas de la construction en coquille, ainsi qu'un réservoir d'essorage (10) constitué par l'espace formé entre les parois de la construction en coquille, cette construction en coquille étant destinée à être plongée dans la masse de boue pour drainer le liquide de cette masse de boue de manière à le faire passer dans le réservoir (10) tandis que les particules solides sont retenues à un degré voulu sur l'extérieur du filtre, un système de rejet (14-16 ; 23, 114) destiné à retirer le liquide collecté dans le réservoir d'essorage, par le fond de ce réservoir ou à un niveau correspondant au degré voulu d'essorage, et un système de jet rotatif (17-22) monté dans le bloc de drainage pour nettoyer au jet les surfaces de filtre.

3. Bloc de drainage selon la revendication 2, caractérisé en ce que la construction en coquille est constituée par un cylindre ouvert à double paroi muni d'une chemise intérieure et d'une chemise extérieure (25, 26), ces chemises étant complètement ou partiellement recouvertes d'un filtre ; et en ce que le cylindre est destiné à être placé verticalement debout dans la masse de boue, la chemise intérieure et la chemise extérieure étant reliées entre elles au moins à l'extrémité tournée vers le bas du cylindre de façon que l'espace compris entre la chemise intérieure et la chemise extérieure forme un réservoir d'essorage annulaire (10).

4. Bloc de drainage selon l'une quelconque des revendications 2 ou 3, caractérisé en ce que le système de rejet est constitué par une pompe (23) montée dans le réservoir d'essorage, et par un conduit de sortie de rejet (114) relié à la pompe.

5. Bloc de drainage selon l'une quelconque des revendications 2 ou 3, caractérisé en ce que le système de rejet comprend en outre un conduit de sortie de rejet (14) et un tuyau de niveau (15) relié à celui-ci, les sorties de rejet (16) étant disposées à des hauteurs différentes.

6. Bloc de drainage selon l'une quelconque des revendications 2 à 5, caractérisé en ce que le support de filtre est constitué par un treillis ou treillage de support à mailles relativement grosses (11, 12) sur lequel on a disposé le filtre (13).

7. Bloc de drainage selon la revendication 6, caractérisé en ce que le filtre (13) présente une maille de tamis de 1 micromètre à 6 mm se situant de préférence dans un ordre de grandeur compris entre 0,5 et 2 mm.

8. Bloc de drainage selon l'une quelconque des revendications 2 à 7, caractérisé en ce que le système de nettoyage au jet comprend un certain nombre de buses (22) servant à nettoyer au jet les surfaces de support de filtre du réservoir d'essorage.

9. Bloc de drainage selon la revendication 8, caractérisé en ce que le système de jets comprend en outre un conduit d'eau de jaillissement tournant au centre du bloc de drainage et d'où partent un certain nombre de tubes de jaillissement équipés des buses.

10. Bloc de drainage selon la revendication 8, caractérisé en ce que les buses sont montées sur une ou plusieurs têtes de jaillissement rotatives.

11. Bloc de drainage selon l'une quelconque des revendications 2 à 10, caractérisé en ce qu'il est monté dans un réservoir de boue (1) muni d'un orifice d'entrée (3) de boue nouvelle, et d'un orifice inférieur (6, 8) de sortie de la boue essorée, le réservoir de boue comprenant, si cela est nécessaire, d'autres blocs de drainage de la même construction.

12. Bloc de drainage selon la revendication 11, caractérisé en ce que ce bloc est cylindrique et monté concentriquement dans le réservoir de boue luimême cylindrique et muni d'une partie inférieure conique.

13. Bloc de drainage selon l'une quelconque des revendications 2 à 10, caractérisé en ce qu'il est placé dans un bassin de boue (101) qui, si cela est nécessaire, contient d'autres blocs de drainage de la même construction.
